# EUROPÄISCHE PATENTSCHRIFT

(11) **EP 4 269 819 B1**
(45) Veröffentlichungstag und Bekanntmachung des Hinweises auf die Patenterteilung: **12.02.2025**
(21) Anmeldenummer: 23161972.7
(22) Anmeldetag: 15.03.2023
(51) Int. Cl.: F16B 21/18

(54) **SICHERUNGSRING**
SECURING RING
BAGUE DE SÉCURITÉ

(30) Priorität: 29.04.2022 DE 102022110492
(43) Veröffentlichungstag der Anmeldung: 01.11.2023
(73) Patentinhaber: Tridonic GmbH & Co. KG, 6851 Dornbirn (AT)
(72) Erfinder: WILD, Emanuel, 6850 Dornbirn (AT)
(74) Vertreter: Kiwit, Benedikt

(56) Entgegenhaltungen:
- EP-A1- 2 388 486
- EP-A1- 2 804 552
- US-A- 2 755 698
- US-A- 2 986 060
- US-A1- 2009 016 846

## Beschreibung

Die vorliegende Erfindung betrifft einen Sicherungsring, eine mit dem Sicherungsring ausgestattete elektronische Komponente sowie eine Baugruppe mit der über den Sicherungsring gehaltenen elektronischen Komponente.

Sicherungsringe sind aus dem Stand der Technik bekannt (siehe z.B. EP 2 388 486 A1) Dabei handelt es sich in der Regel um geschlitzte Ringe, welche der axialen Lagesicherung von Bauteilen auf länglichen Körpern, wie Wellen oder Achsen, dienen. Dazu werden die Sicherungsringe in der Regel auf eine das Bauteil meist umlaufende radiale Ringnut geschnappt, um so eine axiale Anlagefläche bereitzustellen.

Darüber hinaus ist bekannt, dass Komponenten von einer ersten Seite teilweise durch eine Öffnung in einem Gehäuse geführt sind, so dass sie auf der ersten Seite mit einem Abschnitt anliegen und auf der gegenüberliegenden zweiten Seite mittels eines Sicherungsrings gegenüber der zweiten Seite und axial gesichert sind. Durch die axiale Anlage des Abschnitts auf der ersten Seite und des Sicherungsrings auf der zweiten Seite kann so die Komponente in dem Gehäuse dauerhaft sicher aber lösbar gehalten werden. Auf diese Weise werden beispielsweise Sensoren an Baugruppen, wie Leuchten, befestigt, welche für den Betrieb und die Steuerung der Baugruppe dienen können. Für die Halterungen werden oft herkömmliche Sicherungsringe der vorhergehend beschriebenen Art verwendet, welche jedoch mitunter nur eine geringe Haltekraft aufweisen oder nur schwer auf die oft kleindimensionierten Nuten entsprechender Komponenten aufschnappbar sind. Alternativ können entsprechende Komponenten beispielsweise auch mittels Kunststoffklammern oder Schnappern befestigt werden, welche jedoch leicht brechen und zudem im Laufe der Lebensdauer des Sensors zu Versprödung neigen, wodurch eine dauerhafte sichere Befestigung beeinträchtigt sein kann.

Die vorbeschriebenen Sicherungsringe wiederum haben den Nachteil, dass sie in der Regel außen sichtbar vorgesehen sind und somit das ästhetische Erscheinungsbild einer damit ausgestatteten Baugruppe beeinträchtigen können.

Es ist somit eine Aufgabe der vorliegenden Erfindung, einen Sicherungsring sowie eine damit ausgestattete elektronische Komponente und eine wiederum damit ausgestattete Baugruppe bereitzustellen, welche eine einfache und dauerhaft sichere sowie bevorzugt bei Bedarf wieder lösbare Befestigung ermöglichen.

Diese Aufgabe wird durch den Gegenstand der unabhängigen Ansprüche gelöst. Die abhängigen Ansprüche bilden den zentralen Gedanken der vorliegenden Erfindung in besonders vorteilhafter Weise weiter.

Gemäß einem ersten Aspekt betrifft die vorliegende Erfindung einen Sicherungsring, welcher sich im Wesentlichen in einer Ebene erstreckt. Der Sicherungsring weist einen Ringkörper auf, welcher sich um eine Mittelachse herum zwischen zwei einen Ringschlitz begrenzenden Enden erstreckt. Der Sicherungsring weist des Weiteren mehrere sich vom Ringkörper über dessen Umfang verteilt und radial zur Mittelachse hin in der Ebene flächig erstreckende Sicherungsvorsprünge. Wenigstens einer der Sicherungsvorsprünge weist wenigstens einen axialen (also sich axial durch den betreffenden Sicherungsvorsprung hindurch erstreckenden) und zur Mittelachse hin offenen Spreizschlitz auf.

Durch die über den Umfang bereitgestellten Sicherungsvorsprünge ist der Sicherungsring insgesamt weniger massiv ausgebildet und kann so einerseits einfach zum Aufschnappen aufgespreizt werden, während er andererseits durch die definierten Sicherungsvorsprünge eine sichere Haltestruktur bietet. Durch den zusätzlichen Spreizschlitz im Bereich wenigstens eines der Sicherungsvorsprünge kann ein Aufspreizen des Sicherungsrings insbesondere in einem massiveren Bereich des Sicherungsrings einfacher ermöglicht werden. So ist ein Aufspreizen des Sicherungsringes im Vergleich zu einem Sicherungsring ohne Spreizschlitze erleichtert. Zudem wird so eine Gefahr einer Deformation des Sicherungsrings durch Aufspreizen reduziert, ohne dessen Haltefunktion zu beeinträchtigen. Dies gilt umso mehr für vergleichsweise kleine zu befestigende Komponenten und somit Befestigungsbereiche, da bei derart kleinen Dimensionen ein Aufspreizen des Sicherungsrings oft erschwert ist. Die Verwendung eines entsprechenden Sicherungsrings kann konstruktionsbedingt zudem einen vergleichsweise hohen IK-Stoßfestigkeitsgrad ermöglichen.

Der Spreizschlitz kann sich bevorzugt radial wenigstens entlang eines Teils oder über den gesamten Sicherungsvorsprung und vorzugsweise ferner bis teilweise radial in den Ringkörper hinein erstrecken. Der Spreizschlitz kann somit derart ausgebildet werden, dass er einerseits eine ausreichende Aufspreizung ermöglicht, während andererseits die Funktionalität des Sicherungsrings aufrechterhalten bleibt und zudem eine Beschädigung des Sicherungsrings sicher vermieden werden kann.

Der wenigstens eine der Sicherungsvorsprünge kann auch mehrere über den Umfang zueinander versetzte Spreizschlitze aufweisen. Insbesondere bei über den Umfang gesehen breiten Sicherungsvorsprüngen können diese zur Aufspreizung flexibel gestaltet werden, während sie gleichzeitig eine gute Sicherungsfunktion bieten.

Die Spreizschlitze eines Sicherungsvorsprungs können bevorzugt in Umfangsrichtung über einen Winkel α von 5° bis 30°, bevorzugt 10° oder 9,3°, zueinander versetzt sein. So können die Spreizschlitze je nach Anforderung und Größe bzw. Umfangslänge der Sicherungsvorsprünge nach Bedarf ausgebildet werden, um eine gewünschte einfache Befestigung bei gleichzeitig gewünschter guter Sicherung je nach Anforderung zu ermöglichen.

Mehrere oder alle der Sicherungsvorsprünge können bevorzugt wenigstens einen oder mehrere der Spreizschlitze aufweisen. Somit kann je nach Bedarf der Sicherungsring beliebig gestaltet werden, um einerseits eine komfortable Aufspreizung zu ermöglichen, während andererseits die Haltefunktion sicher erhalten bleibt.

Jeder der Sicherungsvorsprünge kann sich in Umfangsrichtung bevorzugt über einen Winkel γ von 10° bis 60°, bevorzugt 30° oder 33,3°, erstrecken. Somit kann der Sicherungsvorsprung je nach Anforderung und Größe des Sicherungsrings eine definierte Umfangslänge bereitstellen, um ein dauerhaftes und sicheres Befestigen zu ermöglichen; dies auch in Abhängigkeit der aufzubringenden axialen Haltekraft.

Die Sicherungsvorsprünge haben bevorzugt jeweils eine zur Mittelachse hin weisende distale Anlageseite. Diese bevorzugt flächige Anlageseite bietet eine gute und sichere Anlagefläche und somit sichere Klemmfunktion gegenüber einer damit zu befestigenden Komponente.

Die Anlageseiten mehrerer oder aller Sicherungsvorsprünge können sich entlang eines in der Ebene liegenden Kreises um die Mittelachse herum erstrecken. Auf diese Weise kann mittels der Anlageseiten insbesondere bezüglich eines zylindrischen Körpers, auf den der Sicherungsring vorgesehen werden soll, bzw. bezüglich einer Ringnut, in die der Sicherungsring eingreifen soll, hoch effektiv großflächig vorgesehen werden, um somit eine besonders gute und dauerhafte Sicherung zu ermöglichen.

Die Sicherungsvorsprünge sind bevorzugt gleichmäßig über den Umfang des Ringkörpers verteilt vorgesehen. Somit kann eine umfangsseitig gleichmäßige Haltefunktion bereitbestellt werden, was eine besonders sichere und dauerhafte Sicherung mittels des Sicherungsrings ermöglicht.

Der Sicherungsring kann bevorzugt wenigstens drei oder vier oder fünf oder sechs oder mehr Sicherungsvorsprünge aufweisen. Somit kann, je nach Bedarf, der Sicherungsring den Umständen sowie der Größe der zu befestigenden Komponenten entsprechend ausgebildet werden, um eine an die Gegebenheiten optimal angepasste Sicherungsfunktion zu erfüllen.

Von den den Ringschlitz begrenzenden Enden des Ringkörpers kann sich bevorzugt jeweils einer der Sicherungsvorsprünge erstrecken. Somit kann der Sicherungsring insbesondere an seinen in Umfangsrichtung gesehen exponierten Enden sicher und stabil ausgebildet sein. Des Weiteren kann somit über den Umfang gesehen eine optimierte Verteilung der Sicherungsvorsprünge ermöglicht werden, um eine hoch effektive Sicherung mittels des Sicherungsrings zu bewirken.

Der Sicherungsring kann an den den Ringschlitz begrenzenden Enden des Ringkörpers und/oder den zugeordneten Sicherungsvorsprüngen jeweils eine axiale Ausnehmung oder Durchgangsöffnung aufweisen, in die ein Werkzeug zur Aufspreizung des Sicherungsrings in der Ebene bezüglich des Ringschlitzes aufgenommen werden kann. Dabei kann es sich beispielsweise um eine entsprechend dafür ausgelegte Zange handeln, die mit ihren beiden Enden in die entsprechenden Ausnehmungen eingeführt wird und durch Öffnen der Zange beide Enden des Ringkörpers voneinander weg bewegt, so dass der Ringschlitz vergrößert und der Sicherungsring insgesamt über den Ringschlitz und die Spreizschlitze einfach aufgespreizt werden kann. Somit wird eine einfache und sichere Bedienung und insbesondere Befestigung oder Demontage des erfindungsgemäßen Sicherungsrings ermöglicht. Durch die mittels des Werkzeugs aufbringbaren Hebelkräfte können so auch mitunter stramm sitzende Sicherungsringe vergleichsweise einfach montiert und demontiert werden.

Der Ringschlitz kann bevorzugt eine Schlitzbreite in Umfangsrichtung über einen Winkel β von 10° bis 60°, bevorzugt 30° oder 24,9°, aufweisen. Somit kann, je nach Bedarf, einerseits das Aufsetzten des Sicherungsrings den Umständen entsprechend ermöglicht werden, und zudem ein sicheres Umschließen des Sicherungsrings an der zu befestigenden Komponente ermöglicht werden.

Der Ringkörper kann sich bevorzugt entlang eines in der Ebene liegenden Kreises um die Mittelachse herum erstrecken. Der Sicherungsring ist somit einfach herzustellen. Zudem kann der Sicherungsring insbesondere um zylindrische Körper einfach und ästhetisch ansprechend angeordnet werden, während er gleichzeitig eine hoch effektive Befestigung ermöglicht.

Der Sicherungsring kann bevorzugt aus Stahl, wie Federstahl und/oder rostfreiem Edelstahl, hergestellt sein. Somit bietet der Sicherungsring auch dauerhaft gute Halteeigenschaften und ist nur geringfügigen Alterungsprozessen ausgesetzt; insbesondere im Vergleich zu Halterungsbauteilen aus Kunststoff und dergleichen. Der Sicherungsring ist definitionsgemäß einstückig ausgebildet.

Gemäß einem weiteren Aspekt betrifft die vorliegende Erfindung eine elektronische Komponente mit einem Gehäuse sowie dem erfindungsgemäßen Sicherungsring. Das Gehäuse wiederum weist einen Hauptkörper und einen sich entlang einer Erstreckungsachse vom Hauptkörper weg erstreckenden Funktionskörper auf. Der Hauptkörper ist mit dem Funktionskörper über einen sich vom Funktionskörper axial nach außen erstreckenden Stufenabschnitt verbunden. Mithin ist das Gehäuse im Bereich des Übergangs vom Hauptkörper zum Funktionskörper unterschiedlich breit ausgebildet, indem der Hauptkörper in diesem Bereich breiter ist, um so den beschriebenen Stufenabschnitt bereitzustellen. Der Funktionskörper weist an seinem dem Hauptkörper abgewandten Ende einen Funktionsabschnitt auf. Der Funktionskörper weist zudem an seiner (seitlichen) Außenfläche bzw. Außenseite zwischen dem Funktionsabschnitt und dem Stufenabschnitt eine sich wenigstens teilweise um die Erstreckungsachse erstreckende radiale Nut auf; bevorzugt eine sich vollständig um die Erstreckungsachse erstreckende radiale Ringnut. Der Sicherungsring ist durch Aufspreizen über den Ringschlitz und den oder die Spreizschlitze derart auf das Gehäuse aufgeschnappt, so dass der Sicherungsring mit seinen Sicherungsvorsprüngen radial in die Nut ragt, um den Sicherungsring darin axial formschlüssig aufzunehmen, so dass der Ringkörper mit dem Stufenabschnitt einen Klemmraum begrenzt; mithin den Klemmraum dazwischen (also zwischen Ringkörper und Stufenabschnitt) axial begrenzt.

Die vorbeschriebenen Vorteile des Sicherungsrings werden auf diese Weise auf eine damit bestrückte elektronische Komponente zum Befestigen ebendieser übertragen. Der Sicherungsring kann sowohl einfach auf das Gehäuse aufgeschnappt werden als dieses auch dauerhaft sicher axial zu tragen bzw. zu befestigen.

Die Sicherungsvorsprünge liegen bevorzugt mit ihrer Anlageseite umlaufend flächig an einem Grund der Nut auf; dies vorzugsweise radial klemmend. Auf diese Weise wird eine besonders gute Befestigung und Sicherung des Sicherungsrings bewirkt, da dieser in einem vorgespannten Zustand mit dem Gehäuse verbunden ist. Zudem wird so ferner bevorzugt radiales Spiel kompensiert, was zu einer sicheren Befestigung weiter beiträgt.

In dem Klemmraum kann ein umfangsseitig geschlossenes Dichtelement vorgesehen sein, welches axial auf dem Stufenabschnitt aufliegt und zwischen sich und dem Ringkörper einen Dichtklemmraum begrenzt. Durch das Bereitstellen eines entsprechenden Dichtelements kann einerseits das Eindringen von Schmutz und/oder Wasser über die Befestigungsstelle der elektronischen Komponente bspw. an einem im Weiteren noch beschriebenen Baugruppengehäuse sicher vermieden werden. Dabei können, je nach Ausgestaltung der Dichtung sowie der Klemmkräfte, beliebig definierte IP Schutzklassen erzielt werden. Denkbar ist beispielsweise eine Dichtheit gemäß IP 66. Die Dichtung kann, je nach Ausgestaltung, ferner bevorzugt eine beliebige Dämpfungsfunktion ermöglicht werden, wodurch zudem ein definierter und vergleichsweise hoher IK-Stoßfestigkeitsgrad erzielt werden kann.

Die elektronische Komponente kann ferner eine Abdeckung mit einem ringförmigen Abdeckkörper aufweisen, der den Sicherungsring auf einer dem Stufenabschnitt abgewandten Seite abdeckt; dies bevorzugt vollständig umfangsseitig geschlossen. Auf diese Weise kann das ästhetische Erscheinungsbild der mit dem Sicherungsring befestigten elektronischen Komponente verbessert werde. Die Abdeckung kann dabei beliebig gestaltet sein, und beispielsweise die Befestigung der elektronischen Komponente weitestgehend kaschieren oder auch zur Bereitstellung weiterer Informationen, wie beispielsweise Sicherungs- oder Bedienhinweise, dienen.

Der Abdeckkörper kann bevorzugt eine zentrale Öffnung begrenzen, durch welche der Funktionsabschnitt wenigstens teilweise hindurch ragt. Somit kann zum einen der Befestigungsbereich der elektronischen Komponente - sprich der Sicherungsring - einfach abgedeckt bzw. kaschiert werden, während gleichzeitig die elektronische Komponente durch Exponieren ihres Funktionsbereichs vollkommen funktionsfähig erhalten bleibt.

Die Abdeckung kann bevorzugt Rastvorsprünge aufweisen, welche in der Nut rastend aufgenommen sind. Somit kann in einfacher Weise eine integrale Befestigung der Abdeckung bereitgestellt werden, welche zudem in ohnehin bereits vorhandene Strukturelemente, nämlich die Nut, eingreifen kann, so dass insgesamt eine einfache und sichere Befestigung der Abdeckung bereitgestellt werden kann.

Die Rastvorsprünge stehen bevorzugt vom Abdeckkörper zum Sicherungsring hin axial vor. Somit sind die Rastvorsprünge zur Befestigung der Abdeckung auf einer Rückseite derselben vorgesehen und somit im befestigten Zustand der Abdeckung nicht sichtbar. Ferner sind die Rastvorsprünge so effektiv zu ihrem Befestigungsbereich - nämlich der Nut - hin vorgesehen.

Die Rastvorsprünge können an ihren dem Abdeckkörper abgewandten distalen Ende einen radial nach innen vorspringenden Schnappabschnitt aufweisen, welcher radial in die Nut ragt, um die Abdeckung somit axial formschlüssig zu halten. Die Rastvorsprünge sind somit einfach als Schnapphaken ausgebildet, welche trotz einfachen Aufbaus eine effektive Haltefunktion ermöglichen und bei Bedarf auch zerstörungsfrei lösbar sind, um den Sicherungsring - beispielsweise zu Wartungszwecken - wahlweise freizulegen.

Die Rastvorsprünge können über den Umfang des Abdeckkörpers verteilt und vorzugsweise gleichmäßig verteilt sein. Somit kann eine effektive und bevorzugt gleichmäßige Haltefunktion der Abdeckung bereitgestellt werden.

Die Rastvorsprünge können axial in einen in der Ebene von der Außenseite des Funktionskörpers (vorzugsweise dessen Nut) und zwei benachbarten Sicherungsvorsprüngen sowie bevorzugt ferner von dem Ringkörper (seitlich) begrenzten Durchgriffsraum zur Nut hin ragen. Somit kann ein gegebener Raum - bspw. der Ringschlitz und/oder ein von zwei benachbarten Sicherungsvorsprüngen begrenzter Raum - gleichzeitig zur Bereitstellung der Befestigung der Abdeckung effektiv genutzt werden, ohne die Befestigung des Sicherungsrings zu beeinträchtigen. Dies sorgt für eine effektive Befestigung der Abdeckung bei kompakter Bauweise und hohem ästhetischen Erscheinungsbild.

Die elektronische Komponente kann ferner ein elektronisches Element aufweisen, welches in dem Gehäuse aufgenommen ist. Ein Funktionsteil des elektronischen Elements kann dabei in dem Funktionsabschnitt angeordnet sein. Die elektronische Komponente kann somit beliebig ausgestattet werden, um jedwede elektronische Funktion bereitzustellen, wodurch ein insgesamt vielfältiges Einsatzgebiet ermöglicht wird, auf das die Befestigung mittels des Sicherungsrings angewendet werden kann. Die Anordnung des Funktionsteils in dem Funktionsabschnitt ermöglicht eine effektive Nutzung der über den Sicherungsring sicher befestigten elektronischen Komponente.

Das elektronische Element kann bevorzugt eine Sensorelektronik sein und das Funktionsteil ein Sensorkopf. Somit können beliebige Sensoren, welche oft für den Betrieb einer entsprechenden Baugruppe eingesetzt werden und dazu bevorzugt sicher zu positionieren sind, mittels des beschriebenen Sicherungsrings dauerhaft und sicher befestigt werden.

Gemäß einem weiteren Aspekt betrifft die vorliegende Erfindung ferner eine Baugruppe, welche neben der oben beschriebenen elektronischen Komponente ferner ein Baugruppengehäuse mit wenigstens einer Gehäusewand aufweist. Die Gehäusewand weist eine Durchtrittsöffnung auf. Ein die Durchtrittsöffnung umgebender Gehäuseabschnitt ist in dem Klemmraum oder, wenn vorhanden, dem Dichtklemmraum axial eingeklemmt, um die elektronische Komponente derart an der Gehäusewand zu befestigen, so dass der Funktionsabschnitt durch die Durchtrittsöffnung nach außen ragt. Auf diese Weise kann ein beliebiges Baugruppengehäuse, wie beispielsweise ein Leuchtengehäuse, in einfacher und sicherer Weise mit der elektronischen Komponente mit Hilfe des vorbeschriebenen Sicherungsrings befestigt werden.

Weitere Ausgestaltungen, Merkmale und Vorteile der vorliegenden Erfindung werden anhand der Figuren der begleitenden Zeichnungen beschrieben. Es zeigen:
- Fig. 1: eine Seitenansicht einer erfindungsgemäßen Baugruppe mit einer erfindungsgemäßen elektronischen Komponente und einem erfindungsgemäßen Sicherungsring gemäß einem ersten Ausführungsbeispiel der vorliegenden Erfindung,
- Fig. 2: eine perspektivische Draufsicht auf die Baugruppe gemäß Fig. 1,
- Fig. 3: eine perspektivische Draufsicht in Teilschnittansicht der Baugruppe gemäß Fig. 1,
- Fig. 4: eine perspektivische Draufsicht auf den erfindungsgemäßen Sicherungsring der Baugruppe gemäß Fig. 1,
- Fig. 5: eine perspektivische Unteransicht einer Abdeckung gemäß einem Ausführungsbeispiel,
- Fig. 6: eine Draufsicht auf die Baugruppe gemäß Fig. 1 mit der Abdeckung gemäß Fig. 5,
- Fig. 7: eine Draufsicht auf die Baugruppe gemäß Fig. 1 mit einer durchsichtigen Abdeckung gemäß einem weiteren Ausführungsbeispiel vergleichbar der Abdeckung gemäß Fig. 5, und
- Fig. 8: eine perspektivische Unteransicht eines Details der elektronischen Komponente gemäß Figur 1 mit der Abdeckung gemäß Fig. 5.

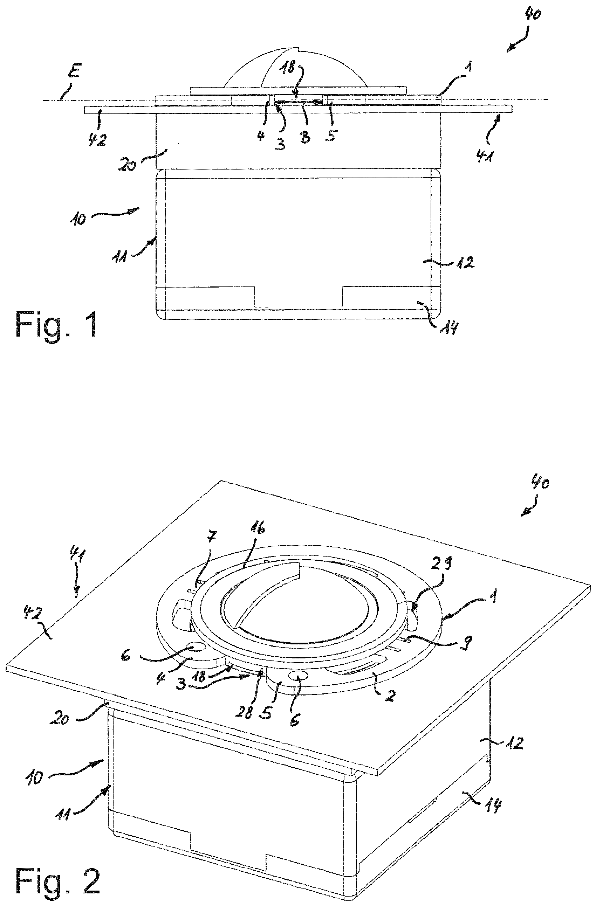

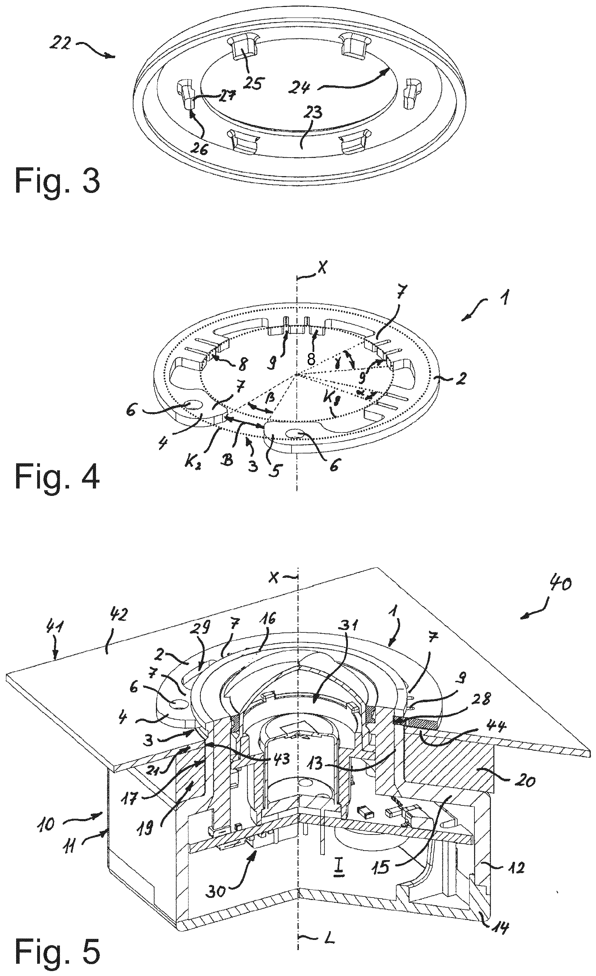

Fig. 4 zeigt einen Sicherungsring 1 gemäß einem Ausführungsbeispiel der vorliegenden Erfindung. Der Sicherungsring 1 erstreckt sich im Wesentlichen in einer Ebene E, wie diese beispielhaft in Fig. 1 gezeigt ist. Der Sicherungsring 1 ist bevorzugt aus Stahl, wie vorzugsweise aus Federstahl und/oder bevorzugt aus rostfreiem Edelstahl, hergestellt. Beispielsweise kann der Sicherungsring 1 aus einem entsprechenden Material ausgestanzt sein. Der Sicherungsring 1 ist definitionsgemäß einstückig ausgebildet.

Der Sicherungsring 1 weist einen Ringkörper 2 auf, welcher sich um eine Mittelachse X herum zwischen zwei einen Ringschlitz 3 begrenzenden Enden 4, 5 erstreckt. Der Ringkörper 2 kann sich entlang eines in der Ebene E liegenden Kreises K₂ um die Mittelachse X herum erstrecken.

Der Sicherungsring 1 kann an den den Ringschlitz 3 begrenzenden Enden 4, 5 des Ringkörpers 2 jeweils eine axiale Ausnehmung oder Durchgangsöffnung 6 zur Aufnahme eines Werkzeugs zur Aufspreizung des Sicherungsrings 1 in der Ebene E bezüglich des Ringschlitzes 3 aufweisen; dies wenigstens teilweise. Die Durchgangsöffnungen 6 sind hier als zylindrische Durchtrittsöffnungen ausgebildet, in die entsprechende zylindrische Enden einer Spreizzange eingeführt werden können, um so den Sicherungsring 1, wie beschrieben, zur Montage bzw. Demontage aufzuspreizen.

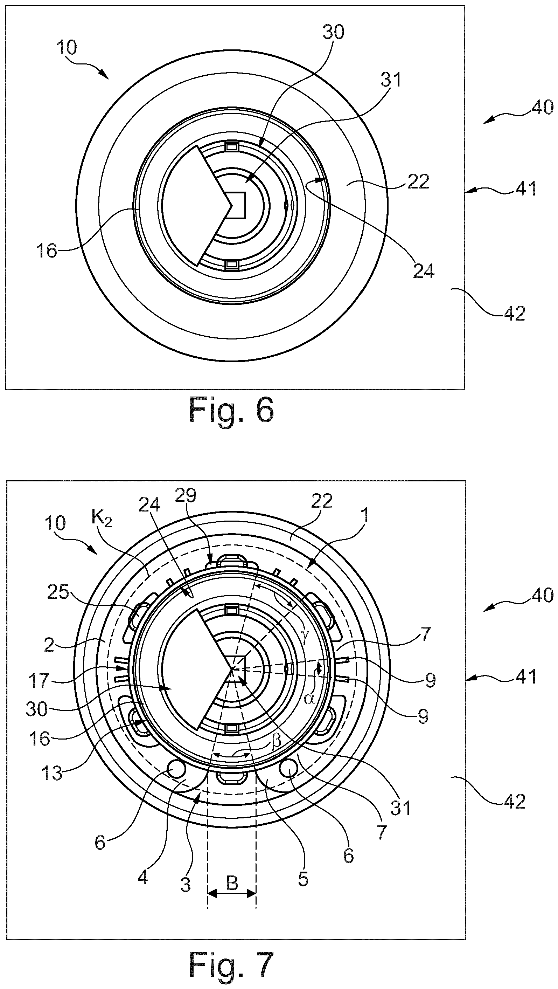

Der Ringschlitz 3 kann eine Schlitzbreite B in Umfangsrichtung über einen Winkel β von 10° bis 60°, bevorzugt 30° oder 24,9°, aufweisen, wie beispielhaft in den Figuren 4 und 7 gezeigt ist.

Der Sicherungsring 1 weist des Weiteren mehrere sich vom Ringkörper 2 über dessen Umfang verteilt und radial zur Mittelachse X hin in der Ebene E flächig erstreckende Sicherungsvorsprünge 7 auf. Jeder der Sicherungsvorsprünge 7 erstreckt sich bevorzugt in Umfangsrichtung über einen Winkel γ von 10° bis 60°, bevorzugt 30° oder 33,3°, wie beispielhaft in den Figuren 4 und 7 gezeigt ist.

Die Sicherungsvorsprünge 7 haben bevorzugt jeweils eine zur Mittelachse X hin weisende distale Anlageseite 8, wie insbesondere der Fig. 4 zu entnehmen ist. Die Anlageseite 8 mehrerer oder, wie hier dargestellt, aller Sicherungsvorsprünge 7 erstrecken sich bevorzugt entlang eines in der Ebene E liegenden Kreises K₈ um die Mittelachse X herum, wie beispielhaft in den Figuren 4 und 7 gezeigt ist.

Wie ebenfalls der Fig. 4 zu entnehmen ist, können die Sicherungsvorsprünge 7 bevorzugt gleichmäßig über den Umfang des Ringkörpers 2 verteilt vorgesehen sein.

Der Sicherungsring 1 kann wenigstens drei oder wenigstens vier oder wenigstens fünf oder wenigstens 6 (wie in Fig. 4 gezeigt) oder auch mehr Sicherungsvorsprünge 7 aufweisen.

Wie ebenso in Fig. 4 gezeigt ist, kann sich von den den Ringschlitz 3 begrenzenden Enden 4, 5 des Ringkörpers 2 jeweils einer der Sicherungsvorsprünge 7 erstrecken. Diese können so den zuvor beschriebenen Ringschlitz 3 in Umfangsrichtung - also in der Ebene - seitlich begrenzen, wie beispielhaft den Figuren 1 bis 4, 7 und 8 zu entnehmen ist. Diese Sicherungsvorsprünge 7 können zudem bevorzugt wenigstens teilweise die vorbeschriebenen Durchgangsöffnungen 6 aufweisen, wie beispielhaft den Figuren 2, 4, 7 und 8 zu entnehmen ist.

Wenigstens einer der Sicherungsvorsprünge 7 weist wenigstens einen axialen - also sich axial durch den betreffenden Sicherungsvorsprung 7 hindurch erstreckenden - und zur Mittelachse X hin offenen Spreizschlitz 9 auf. Der Spreizschlitz 9 kann sich dabei bevorzugt radial wenigstens entlang eines Teils oder über den gesamten Sicherungsvorsprung 7, wie in Fig. 4 gezeigt, und bevorzugt ferner auch bis teilweise radial in den Ringkörper 2 hinein erstrecken.

Wie ebenso in Fig. 4 sowie auch in Fig. 7 gezeigt ist, kann der wenigstens eine der Sicherungsvorsprünge 7 auch mehrere - hier zwei - über den Umfang zueinander versetzte Spreizschlitze 9 aufweisen. Diese mehreren Spreizschlitze 9 eines Sicherungsvorsprungs 7 können bevorzugt in Umfangsrichtung über einen Winkel α von 5° bis 30°, bevorzugt 10° oder 9,3°, zueinander versetzt sein.

Wie ebenso Figuren 4 und 7 zu entnehmen ist, können auch mehrere (hier vier von sechs) oder auch alle der Sicherungsvorsprünge 7 wenigstens einen oder mehrere (hier jeweils zwei) der Spreizschlitze 9 aufweisen.

Die Figuren 1 bis 3 sowie 6 bis 8 zeigen eine elektronische Komponente 10 gemäß einem Ausführungsbeispiel der vorliegenden Erfindung. Die elektronische Komponente 10 weist dabei einen Sicherungsring 1 gemäß der vorliegenden Erfindung auf, wie er zuvor beispielhaft - insbesondere mit Verweis auf die Figuren 4 und 7 - beschrieben wurde. Der in Figur 4 dargestellte Sicherungsring 1 ist ebenso Bestandteil der elektronischen Komponente 10, wie in den Figuren 1 bis 3 sowie 6 bis 8 beispielhaft gezeigt.

Neben dem Sicherungsring 1 weist die elektronische Komponente 10 ferner ein Gehäuse 11 auf. Das Gehäuse 11 weist dabei einen Hauptkörper 12 sowie einen sich entlang einer Erstreckungsachse L vom Hauptkörper 12 weg erstreckenden Funktionskörper 13 auf, wie beispielhaft den Figuren 1 bis 3 zu entnehmen ist. Das Gehäuse 11 begrenzt einen Innenraum I.

Das Gehäuse 11 kann weiter bevorzugt einen Deckel 14 aufweisen, wie er beispielsweise in den Figuren 1 bis 3 gezeigt ist und hier als Teil des Hauptkörpers 12 das Gehäuse 11 bzw. dessen Innenraum 1 von unten verschließt.

Der Hauptkörper 12 ist mit dem Funktionskörper 13 über einen sich vom Funktionskörper 13 axial nach außen erstreckenden Stufenabschnitt 15 verbunden, wie dies in Fig. 3 beispielhaft gezeigt ist.

Der Funktionskörper 13 weist an seinem dem Hauptkörper 12 abgewandten Ende (also seinem axialen Ende; bzgl. der Erstreckungsachse L) einen Funktionsabschnitt 16 auf, wie dies in den Figuren 2, 3, 6 und 7 beispielhaft gezeigt ist.

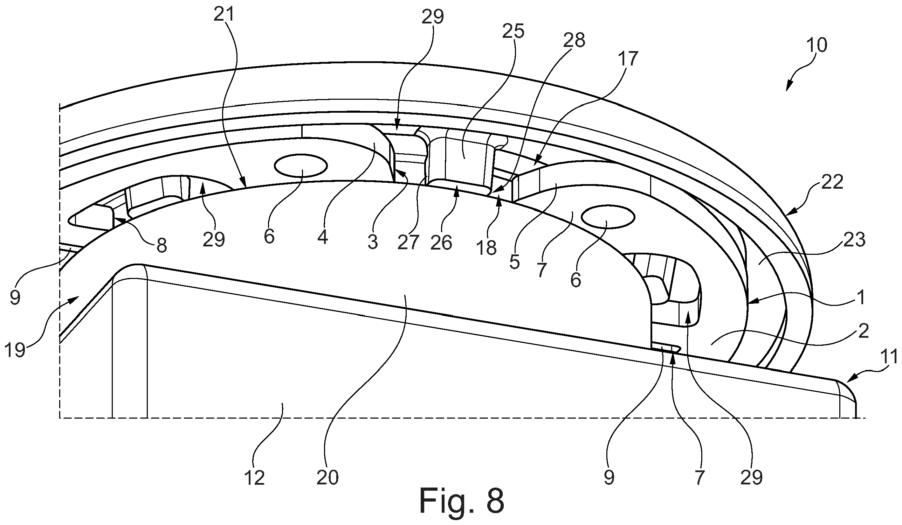

Der Funktionskörper 13 wiederum weist an seiner Außenfläche bzw. Außenseite 17 zwischen dem Funktionsabschnitt 16 und dem Stufenabschnitt 15 eine sich wenigstens teilweise um die Erstreckungsachse E erstreckende radiale Nut 18 auf. Die Nut 18 ist in dem dargestellten Ausführungsbeispiel als umlaufende Ringnut ausgebildet, wie dies den Figuren 3 und 8 beispielhaft zu entnehmen ist.

Der Sicherungsring 1 ist durch Aufspreizen über den Ringschlitz 3 sowie den oder die Spreizschlitze 9 derart auf das Gehäuse 11 aufgeschnappt, so dass der Sicherungsring 1 mit seinen Sicherungsvorsprüngen 7 radial in die Nut 18 ragt, um den Sicherungsring 1 darin axial formschlüssig aufzunehmen, so dass der Ringkörper 2 mit dem Stufenabschnitt 15 einen Klemmraum 19 dazwischen axial begrenzt, wie insbesondere der Fig. 3 aber auch Fig. 8 beispielhaft zu entnehmen ist.

Die Sicherungsvorsprünge 7 können bevorzugt mit ihrer Anlageseite 8 umlaufend flächig an einem Grund 28 der Nut 18 aufliegen; vorzugsweise radial klemmend aufliegen. Dies ist beispielhaft den Figuren 3 und 8 zu entnehmen.

Wie ebenso den Figuren 3 und 8 zu entnehmen ist, kann in dem Klemmraum 19 ein umfangsseitig geschlossenes Dichtelement 20 vorgesehen sein, welches axial auf dem Stufenabschnitt 15 aufliegt, und zwischen sich und dem Ringkörper 2 einen Dichtklemmraum 21 begrenzt.

Die elektronische Komponente 10 kann ferner eine Abdeckung 22 mit einem ringförmigen Abdeckkörper 23 aufweisen, wie dieser separat in Fig. 5 sowie eingebaut in den Figuren 6 bis 8 beispielhaft dargestellt ist. Die Abdeckung 22 dient dazu, den Sicherungsring 1 auf einer dem Stufenabschnitt 15 abgewandten Seite vollständig umfangsseitig geschlossen abzudecken, wie insbesondere den Figuren 6 und 7 beispielhaft zu entnehmen ist.

Der Abdeckkörper 23 kann eine bevorzugte zentrale Öffnung 24 begrenzen, durch welche im eingebauten Zustand der Funktionsabschnitt 16 wenigstens teilweise hindurchragt, wie dies ebenso den Figuren 6 und 7 beispielhaft zu entnehmen ist.

Die Abdeckung 22 kann bevorzugt ferner Rastvorsprünge 25 aufweisen, welche im eingebauten Zustand der Abdeckung in der Nut 18 rastend aufgenommen sind, wie dies in Fig. 8 beispielhaft gezeigt ist. Die Rastvorsprünge 25 stehen bevorzugt vom Abdeckkörper 23 zum Sicherungsring 1 hin axial vor; mithin von einer Unterseite des Abdeckkörpers 23 weg, wie den Unteransichten der Figuren 5 und 8 zu entnehmen ist.

Die Rastvorsprünge 25 können an ihren dem Abdeckkörper 23 abgewandten distalen Ende 26 einen radial nach innen vorspringenden Schnappabschnitt 27 aufweisen, welcher im eingebauten Zustand der Abdeckung 22 radial in die Nut 18 ragt, um die Abdeckung 22 somit axial formschlüssig in der Nut 18 zu halten, wie dies in Fig. 8 beispielhaft gezeigt ist.

Die Rastvorsprünge 25 können bevorzugt über den Umfang des Abdeckkörpers 23 verteilt und vorzugsweise über dessen Umfang gleichmäßig verteilt angeordnet sein, wie dies der Darstellung der Fig. 5 zu entnehmen ist.

Im eingebauten Zustand der Abdeckung 22 können die Rastvorsprünge 25 axial in einen in der Ebene E (bzw. radial) von der Außenseite 17 des Funktionskörpers 13 - bzw. hier im Besonderen von der Nut 18 - sowie zwei benachbarten Sicherungsvorsprüngen 7 begrenzten Durchgriffsraum 29 (hier bspw. gebildet durch den Ringschlitz 3) zur Nut 18 hin vorragen; mithin axial (hier nach unten) von dem Abdeckkörper 23 weg. Wie insbesondere der Fig. 8 zu entnehmen ist, kann dieser Durchgriffsraum 29 (vgl. die beiden Durchgriffsräume 29 rechts und links des Ringschlitzes 3) ferner in der Ebene E bzw. radial von dem Ringkörper 2 begrenzt sein.

Wie insbesondere der Fig. 3 aber auch Figuren 6 und 7 zu entnehmen ist, kann die elektronische Komponente 10 ferner ein elektronisches Element 30 aufweisen, welches in dem Gehäuse 11 bzw. dessen Innenraum 1 aufgenommen ist. Ein Funktionsteil 31 des elektronischen Elements 30 kann dabei in dem Funktionsabschnitt 16 angeordnet sein. In dem dargestellten Ausführungsbeispiel ist das elektronische Element 30 beispielhaft als Sensorelektronik und das Funktionsteil 31 als Sensorkopf ausgebildet.

Die vorliegende Erfindung ist zudem auf eine Baugruppe 40 gerichtet, wie sie beispielhaft in den Fig. 1 bis 3 sowie 6 und 7 gezeigt ist. Die Baugruppe 40 weist dabei, neben der elektronischen Komponente 10, wie sie beispielhaft zuvor beschrieben wurde, ferner ein Baugruppengehäuse 41 mit wenigstens einer Gehäusewand 42 auf, welche wiederum eine Durchtrittsöffnung 43 aufweist. Ein die Durchtrittsöffnung 43 umgebender Gehäuseabschnitt 44 ist dabei, wie beispielhaft in Fig. 3 zu erkennen ist, in dem Klemmraum 19 oder, wenn die Dichtung 20 vorgesehen ist, wie ebenso in Fig. 3 gezeigt ist, in dem Dichtklemmraum 21 axial eingeklemmt, um die elektronische Komponente 10 derart an der Gehäusewand 42 zu befestigen, so dass der Funktionsabschnitt 16, wie insbesondere in den Figuren 1 und 2 sowie 6 und 7 zu erkennen ist, durch die Durchtrittsöffnung 43 nach außen ragt.

Die vorliegende Erfindung ist durch die zuvor beschriebenen Ausführungsbeispiele nicht beschränkt, sofern sie vom Gegenstand der folgenden Ansprüche umfasst ist.

## Patentansprüche

1. Sicherungsring (1), welcher sich im Wesentlichen in einer Ebene (E) erstreckt, aufweisend
einen Ringkörper (2), welcher sich um eine Mittelachse (X) herum zwischen zwei einen Ringschlitz (3) begrenzenden Enden (4, 5) erstreckt, und
mehrere sich vom Ringkörper (2) über dessen Umfang verteilt und radial zur Mittelachse (X) hin in der Ebene (E) flächig erstreckende Sicherungsvorsprünge (7),
**dadurch gekennzeichnet, dass** wenigstens einer der Sicherungsvorsprünge (7) wenigstens einen axialen und zur Mittelachse (X) hin offenen Spreizschlitz (9) aufweist.

2. Sicherungsring (1) nach Anspruch 1, wobei sich der Spreizschlitz (9) radial wenigstens entlang eines Teils oder über den gesamten Sicherungsvorsprung (7) und bevorzugt ferner bis teilweise radial in den Ringkörper (2) hinein erstreckt.

3. Sicherungsring (1) nach einem der vorhergehenden Ansprüche,
wobei der wenigstens eine der Sicherungsvorsprünge (7) mehrere über den Umfang zueinander versetzte Spreizschlitze (9) aufweist, wobei vorzugsweise die Spreizschlitze (9) eines Sicherungsvorsprungs (7) in Umfangsrichtung über einen Winkel α von 5° bis 30°, weiter bevorzugt 10° oder 9,3°, zueinander versetzt sind, und/oder
wobei mehrere oder alle der Sicherungsvorsprünge (7) wenigstens einen oder mehrere der Spreizschlitze (9) aufweisen.

4. Sicherungsring (1) nach einem der vorhergehenden Ansprüche,
wobei sich jeder der Sicherungsvorsprünge (7) in Umfangsrichtung über einen Winkel γ von 10° bis 60°, bevorzugt 30° oder 33,3°, erstreckt, und/oder
wobei die Sicherungsvorsprünge (7) gleichmäßig über den Umfang des Ringkörpers (2) verteilt vorgesehen sind, und/oder
wobei der Sicherungsring (1) wenigstens drei oder wenigstens vier oder wenigstens fünf oder wenigstens sechs Sicherungsvorsprünge (7) aufweist.

5. Sicherungsring (1) nach einem der vorhergehenden Ansprüche, wobei die Sicherungsvorsprünge (7) jeweils eine zur Mittelachse (X) hin weisende distale Anlageseite (8) haben,
wobei sich vorzugsweise die Anlageseiten (8) mehrerer oder aller Sicherungsvorsprünge (7) entlang eines in der Ebene (E) liegenden Kreises (Ks) um die Mittelachse (X) herum erstrecken.

6. Sicherungsring (1) nach einem der vorhergehenden Ansprüche,
wobei sich von den den Ringschlitz (3) begrenzenden Enden (4, 5) des Ringkörpers (2) jeweils einer der Sicherungsvorsprünge (7) erstreckt, und/oder
wobei der Sicherungsring (1) an den den Ringschlitz (3) begrenzenden Enden (4, 5) des Ringkörpers (2) jeweils eine axiale Ausnehmung oder Durchgangsöffnung (6) zur Aufnahme eines Werkzeugs zur Aufspreizung des Sicherungsrings (1) in der Ebene (E) bezüglich des Ringschlitzes (3) aufweist.

7. Sicherungsring (1) nach einem der vorhergehenden Ansprüche, wobei der Ringschlitz (3) eine Schlitzbreite (B) in Umfangsrichtung über einen Winkel β von 10° bis 60°, bevorzugt 30° oder 24,9°, aufweist.

8. Sicherungsring (1) nach einem der vorhergehenden Ansprüche,
wobei sich der Ringkörper (2) entlang eines in der Ebene (E) liegenden Kreises (K₂) um die Mittelachse (X) herum erstreckt, und/oder
wobei der Sicherungsring (1) aus Stahl, vorzugsweise aus Federstahl und/oder rostfreiem Edelstahl, hergestellt ist.

9. Elektronische Komponente (10) aufweisend:
ein Gehäuse (11) mit
• einem Hauptkörper (12), und
• einem sich entlang einer Erstreckungsachse (L) vom Hauptkörper (12) weg erstreckenden Funktionskörper (13), und
einen Sicherungsring (1) gemäß einem der Ansprüche 1 bis 8,
wobei der Hauptkörper (12) mit dem Funktionskörper (13) über einen sich vom Funktionskörper (13) axial nach außen erstreckenden Stufenabschnitt (15) verbunden sind,
wobei der Funktionskörper (13) an seinem dem Hauptkörper (12) abgewandten Ende einen Funktionsabschnitt (16) aufweist,
wobei der Funktionskörper (13) an seiner Außenseite (17) zwischen dem Funktionsabschnitt (16) und dem Stufenabschnitt (15) eine sich wenigstens teilweise um die Erstreckungsachse (L) erstreckende radiale Nut (18) aufweist,
wobei der Sicherungsring (1) durch Aufspreizen über den Ringschlitz (3) und den oder die Spreizschlitze (9) derart auf das Gehäuse (11) aufgeschnappt ist, so dass der Sicherungsring (1) mit seinen Sicherungsvorsprüngen (7) radial in die Nut (18) ragt, um den Sicherungsring (1) darin axial formschlüssig aufzunehmen, so dass der Ringkörper (2) mit dem Stufenabschnitt (15) einen Klemmraum (19) begrenzt.

10. Elektronische Komponente (10) nach Anspruch 9,
wobei die Sicherungsvorsprünge (7) mit ihrer Anlageseite (8) umlaufend flächig an einem Grund (28) der Nut (18) aufliegen, vorzugsweise radial klemmend aufliegen, und/oder
wobei in dem Klemmraum (19) ein umfangsseitig geschlossenes Dichtelement (20) vorgesehen ist, welches axial auf dem Stufenabschnitt (15) aufliegt und zwischen sich und dem Ringkörper (2) einen Dichtklemmraum (21) begrenzt.

11. Elektronische Komponente (10) nach Anspruch 9 oder 10, ferner aufweisend eine Abdeckung (22) mit einem ringförmigen Abdeckkörper (23), der den Sicherungsring (1) auf einer dem Stufenabschnitt (15) abgewandten Seite vollständig umfangsseitig geschlossen abdeckt,
wobei vorzugsweise der Abdeckkörper (23) eine bevorzugt zentrale Öffnung (24) begrenzt, durch welche der Funktionsabschnitt (16) wenigstens teilweise hindurchragt.

12. Elektronische Komponente (10) nach Anspruch 11, wobei die Abdeckung (22) Rastvorsprünge (25) aufweist, welche in der Nut (18) rastend aufgenommen sind.

13. Elektronische Komponente (10) nach Anspruch 12,
wobei die Rastvorsprünge (25) vom Abdeckkörper (23) zum Sicherungsring (1) hin axial vorstehen, und/oder
wobei die Rastvorsprünge (25) an ihren dem Abdeckkörper (23) abgewandtem distalen Ende (26) einen radial nach innen vorspringen Schnappabschnitt (27) aufweisen, welcher radial in die Nut (18) ragt, um die Abdeckung (22) somit axial formschlüssig zu halten, und/oder
wobei die Rastvorsprünge (25) über den Umfang des Abdeckkörpers (23) verteilt und vorzugsweise gleichmäßig verteilt sind, und/oder
wobei die Rastvorsprünge (25) axial in einen in der Ebene von der Außenseite (17) des Funktionskörpers (13), vorzugsweise der Nut (18), und zwei benachbarten Sicherungsvorsprünge (7) und bevorzugt ferner von dem Ringkörper (2) begrenzten Durchgriffsraum (29) zur Nut (18) hin ragen.

14. Elektronische Komponente (10) nach einem der Ansprüche 9 bis 13, ferner aufweisend ein elektronisches Element (30), welches in dem Gehäuse (11) aufgenommen ist, wobei ein Funktionsteil (31) des elektronischen Elements (30) in dem Funktionsabschnitt (16) angeordnet ist,
wobei vorzugsweise das elektronische Element (30) eine Sensorelektronik und das Funktionsteil (31) ein Sensorkopf ist.

15. Baugruppe (40) aufweisend,
ein Baugruppengehäuse (41) mit wenigstens einer Gehäusewand (42), welche eine Durchtrittsöffnung (43) aufweist, und
eine elektronische Komponente (10) gemäß einem der Ansprüche 9 bis 14, wobei ein die Durchtrittsöffnung (43) umgebender Gehäuseabschnitt (44) in dem Klemmraum (19) oder, wenn vorhanden, dem Dichtklemmraum (21) axial eingeklemmt ist, um die elektronische Komponente (10) derart an der Gehäusewand (42) zu befestigt, so dass der Funktionsabschnitt (16) durch die Durchtrittsöffnung (43) nach außen ragt.

## Claims

1. Retaining ring (1) which extends substantially in a plane (E), comprising
a ring body (2) which extends around a central axis (X) between two ends (4, 5) delimiting a ring slot (3), and
a plurality of retaining projections (7) which extend from the ring body (2), distributed over its circumference, in a planar manner radially toward the central axis (X) in the plane (E),
**characterized in that**
at least one of the retaining projections (7) comprises at least one axial expanding slot (9) open toward the central axis (X).

2. Retaining ring (1) according to claim 1, wherein the expanding slot (9) extends radially at least along a part or over the entire retaining projection (7) and preferably further extends partially radially into the ring body (2).

3. Retaining ring (1) according to either of the preceding claims,
wherein the at least one of the retaining projections (7) comprises a plurality of expanding slots (9) offset from one another over the circumference, wherein preferably the expanding slots (9) of a retaining projection (7) are offset from one another in the circumferential direction over an angle α of 5° to 30°, more preferably 10° or 9.3°, and/or
wherein a plurality of or all of the retaining projections (7) comprise at least one or more of the spreading slots (9).

4. Retaining ring (1) according to any of the preceding claims,
wherein each of the retaining projections (7) extends in the circumferential direction over an angle γ of 10° to 60°, preferably 30° or 33.3°, and/or
wherein the retaining projections (7) are evenly distributed over the circumference of the ring body (2), and/or
wherein the retaining ring (1) comprises at least three or at least four or at least five or at least six retaining projections (7).

5. Retaining ring (1) according to any of the preceding claims, wherein the retaining projections (7) each have a distal contact side (8) pointing toward the central axis (X),
wherein preferably the contact sides (8) of a plurality of or all of the retaining projections (7) extend, around the central axis (X), along a circle (Ks) lying in the plane (E).

6. Retaining ring (1) according to any of the preceding claims,
wherein one of the retaining projections (7) extends from each of the ends (4, 5) of the ring body (2) delimiting the ring slot (3), and/or wherein the retaining ring (1) comprises, at each of the ends (4, 5) of the ring body (2) delimiting the ring slot (3), an axial recess or through-opening (6) for receiving a tool for expanding out the retaining ring (1) in the plane (E) with respect to the ring slot (3).

7. Retaining ring (1) according to any of the preceding claims, wherein the ring slot (3) has a slot width (B) in the circumferential direction over an angle β of 10° to 60°, preferably 30° or 24.9°.

8. Retaining ring (1) according to any of the preceding claims,
wherein the ring body (2) extends around the central axis (X) along a circle (K₂) lying in the plane (E), and/or
wherein the retaining ring (1) is made of steel, preferably of spring steel and/or stainless steel.

9. Electronic component (10) comprising:
a housing (11) which has
• a main body (12), and
• a functional body (13) extending along an extension axis (L) away from the main body (12), and
a retaining ring (1) according to any of claims 1 to 8,
wherein the main body (12) is connected to the functional body (13) via a step portion (15) extending axially outward from the functional body (13),
wherein the functional body (13) comprises a functional portion (16) at its end remote from the main body (12),
wherein the functional body (13) comprises, on its outer side (17), between the functional portion (16) and the step portion (15), a radial groove (18) extending at least partially around the extension axis (L), wherein the retaining ring (1) is snapped onto the housing (11) by expanding out over the ring slot (3) and the expanding slot(s) (9) in such a way that the retaining ring (1) protrudes radially into the groove (18) by means of its retaining projections (7) in order to receive the retaining ring (1) therein in an axially form-fitting manner, so that the ring body (2), with the step portion (15), delimits a clamping space (19).

10. Electronic component (10) according to claim 9,
wherein the retaining projections (7) lie with their contact side (8) circumferentially flat on a base (28) of the groove (18), preferably in a radially clamping manner, and/or
wherein a circumferentially closed sealing element (20) is provided in the clamping space (19), which sealing element rests axially on the step portion (15) and delimits a sealing clamping space (21) between itself and the ring body (2).

11. Electronic component (10) according to claim 9 or claim 10, further comprising a cover (22) that has a ring-shaped cover body (23) which completely covers, in a circumferentially closed manner, the retaining ring (1) on a side facing away from the step portion (15),
wherein preferably the cover body (23) delimits a preferably central opening (24) through which the functional portion (16) at least partially protrudes.

12. Electronic component (10) according to claim 11, wherein the cover (22) comprises latching projections (25) which are received in the groove (18) in a latching manner.

13. Electronic component (10) according to claim 12,
wherein the latching projections (25) protrude axially from the cover body (23) toward the retaining ring (1), and/or
wherein the latching projections (25) comprise a radially inwardly projecting snap portion (27) at their distal end (26) remote from the cover body (23), which snap portion protrudes radially into the groove (18) in order to hold the cover (22) in an axially form-fitting manner, and/or
wherein the latching projections (25) are distributed, preferably evenly, over the circumference of the cover body (23), and/or
wherein the latching projections (25) protrude axially into a pass-through space (29) towards the groove (18), which pass-through space is delimited in the plane by the outer side (17) of the functional body (13), preferably of the groove (18), and two adjacent retaining projections (7) and preferably also by the ring body (2).

14. Electronic component (10) according to any of claims 9 to 13, further comprising an electronic element (30) which is received in the housing (11), wherein a functional part (31) of the electronic element (30) is arranged in the functional portion (16),
wherein preferably the electronic element (30) is sensor electronics and the functional part (31) is a sensor head.

15. Assembly (40) comprising
an assembly housing (41) which has at least one housing wall (42) comprising a passage opening (43), and
an electronic component (10) according to any of claims 9 to 14, wherein a housing portion (44) surrounding the passage opening (43) is axially clamped in the clamping space (19) or, if present, in the sealing clamping space (21) in order to affix the electronic component (10) to the housing wall (42) such that the functional portion (16) protrudes outward through the passage opening (43).

## Revendications

1. Bague de sécurité (1) s'étendant sensiblement dans un plan (E), présentant
un corps annulaire (2) qui s'étend autour d'un axe central (X) entre deux extrémités (4, 5) délimitant une fente annulaire (3), et
plusieurs saillies de sécurité (7) réparties à partir du corps annulaire (2) sur sa circonférence et s'étendant à plat dans le plan (E) radialement vers l'axe central (X),
**caractérisé en ce que**
au moins une des saillies de sécurité (7) présente au moins une fente d'écartement (9) axiale et ouverte vers l'axe central (X).

2. Bague de sécurité (1) selon la revendication 1, dans laquelle la fente d'écartement (9) s'étend radialement au moins le long d'une partie ou sur l'ensemble de la saillie de sécurité (7) et de préférence en outre jusqu'à partiellement radialement dans le corps de bague (2).

3. Bague de sécurité (1) selon l'une des revendications précédentes,
dans laquelle l'au moins une des saillies de sécurité (7) présente plusieurs fentes d'écartement (9) décalées les unes par rapport aux autres sur la circonférence, dans laquelle les fentes d'écartement (9) d'une saillie de sécurité (7) sont de préférence décalées les unes par rapport aux autres dans la direction circonférentielle d'un angle α de 5° à 30°, de préférence encore de 10° ou 9,3°, et/ou
dans laquelle plusieurs ou toutes lesdites saillies de sécurité (7) présentent au moins une ou plusieurs des fentes d'écartement (9).

4. Bague de sécurité (1) selon l'une des revendications précédentes,
dans laquelle chacune des saillies de sécurité (7) s'étend dans la direction circonférentielle sur un angle γ de 10° à 60°, de préférence de 30° ou 33,3°, et/ou
dans laquelle les saillies de sécurité (7) sont prévues réparties uniformément sur la circonférence du corps annulaire (2), et/ou
dans laquelle la bague de sécurité (1) présente au moins trois ou au moins quatre ou au moins cinq ou au moins six saillies de sécurité (7).

5. Bague de sécurité (1) selon l'une des revendications précédentes, dans laquelle les saillies de sécurité (7) ont respectivement un côté d'appui distal (8) orienté vers l'axe central (X),
dans laquelle de préférence, les côtés d'appui (8) de plusieurs ou de toutes les saillies de sécurité (7) s'étendent le long d'un cercle (Ks) situé dans le plan (E) autour de l'axe central (X).

6. Bague de sécurité (1) selon l'une des revendications précédentes,
dans laquelle l'une des saillies de sécurité (7) s'étend respectivement à partir des extrémités (4, 5) du corps annulaire (2) délimitant la fente annulaire (3), et/ou dans laquelle la bague de sécurité (1) présente au niveau des extrémités (4, 5) du corps annulaire (2) délimitant la fente annulaire (3) respectivement un évidement axial ou une ouverture de passage (6) pour recevoir un outil destiné à écarter la bague de sécurité (1) dans le plan (E) par rapport à la fente annulaire (3).

7. Bague de sécurité (1) selon l'une des revendications précédentes, dans laquelle la fente annulaire (3) présente une largeur de fente (B) dans la direction circonférentielle sur un angle ß de 10° à 60°, de préférence de 30° ou 24,9°.

8. Bague de sécurité (1) selon l'une des revendications précédentes,
dans laquelle le corps annulaire (2) s'étend le long d'un cercle (K₂) situé dans le plan (E) autour de l'axe central (X), et/ou
dans laquelle la bague de sécurité (1) est fabriquée en acier, de préférence en acier à ressort et/ou en acier inoxydable.

9. Composant électronique (10) présentant :
un boîtier (11) comportant
• un corps principal (12), et
• un corps fonctionnel (13) s'étendant le long d'un axe d'extension (L) en s'éloignant du corps principal (12), et
une bague de sécurité (1) selon l'une des revendications 1 à 8,
dans lequel le corps principal (12) est relié au corps fonctionnel (13) par une section étagée (15) s'étendant axialement vers l'extérieur à partir du corps fonctionnel (13),
dans lequel le corps fonctionnel (13) présente une section fonctionnelle (16) à son extrémité opposée au corps principal (12),
dans lequel le corps fonctionnel (13) présente sur sa face extérieure (17), entre la section fonctionnelle (16) et la section étagée (15), une rainure radiale (18) s'étendant au moins partiellement autour de l'axe d'extension (L), dans lequel la bague de sécurité (1) est encliquetée sur le boîtier (11) par écartement par la fente annulaire (3) et la ou les fentes d'écartement (9) de telle sorte, de sorte que la bague de sécurité (1) pénètre radialement dans la rainure (18) par ses saillies de sécurité (7) pour y recevoir axialement la bague de sécurité (1) par complémentarité de forme, de sorte que le corps annulaire (2) délimite un espace de serrage (19) avec la section étagée (15).

10. Composant électronique (10) selon la revendication 9,
dans lequel les saillies de sécurité (7) s'appuient par leur côté d'appui (8) sur toute la surface de la circonférence sur un fond (28) de la rainure (18), de préférence en étant bloquées radialement, et/ou
dans lequel un élément d'étanchéité (20) fermé sur sa circonférence est prévu dans l'espace de serrage (19), lequel élément repose axialement sur la section étagée (15) et délimite entre lui et le corps annulaire (2) un espace de serrage d'étanchéité (21).

11. Composant électronique (10) selon la revendication 9 ou 10, présentant en outre un élément de recouvrement (22) comportant un corps de recouvrement (23) de forme annulaire, qui recouvre la bague de sécurité (1) sur un côté opposé à la section étagée (15) de manière complètement fermée sur la circonférence,
dans lequel de préférence le corps de recouvrement (23) délimite une ouverture (24) de préférence centrale, à travers laquelle la section fonctionnelle (16) fait saillie au moins partiellement.

12. Composant électronique (10) selon la revendication 11, dans lequel l'élément de recouvrement (22) présente des saillies d'encliquetage (25) qui sont reçues par encliquetage dans la rainure (18).

13. Composant électronique (10) selon la revendication 12,
dans lequel les saillies d'encliquetage (25) dépassent axialement du corps de recouvrement (23) vers la bague de sécurité (1), et/ou
dans lequel les saillies d'encliquetage (25) présentent, au niveau de leur extrémité distale (26) opposée au corps de recouvrement (23), une section d'encliquetage (27) faisant saillie radialement vers l'intérieur, qui pénètre radialement dans la rainure (18), afin de maintenir ainsi l'élément de recouvrement (22) axialement par complémentarité de forme, et/ou
dans lequel les saillies d'encliquetage (25) sont réparties sur la circonférence du corps de recouvrement (23) et de préférence uniformément réparties, et/ou
dans lequel les saillies d'encliquetage (25) font saillie axialement vers la rainure (18) dans un espace de pénétration (29) délimité dans le plan par le côté extérieur (17) du corps fonctionnel (13), de préférence la rainure (18), et deux saillies de sécurité (7) voisines et de préférence en outre par le corps annulaire (2).

14. Composant électronique (10) selon l'une des revendications 9 à 13, présentant en outre un élément électronique (30) logé dans le boîtier (11), dans lequel une partie fonctionnelle (31) de l'élément électronique (30) est agencée dans la section fonctionnelle (16),
dans lequel l'élément électronique (30) est de préférence une électronique de capteur et la partie fonctionnelle (31) est une tête de capteur.

15. Ensemble (40) présentant,
un boîtier de module (41) comportant au moins une paroi de boîtier (42), qui présente une ouverture de passage (43), et
un composant électronique (10) selon l'une des revendications 9 à 14, dans lequel une section de boîtier (44) entourant l'ouverture de passage (43) est serrée axialement dans l'espace de serrage (19) ou, s'il est présent, dans l'espace de serrage d'étanchéité (21) pour fixer le composant électronique (10) à la paroi de boîtier (42) de telle sorte que la section fonctionnelle (16) fait saillie vers l'extérieur à travers l'ouverture de passage (43).
